# EUROPÄISCHE PATENTSCHRIFT

(11) **EP 2 091 121 B1**
(45) Veröffentlichungstag und Bekanntmachung des Hinweises auf die Patenterteilung: **18.04.2012**
(21) Anmeldenummer: 08290146.3
(22) Anmeldetag: 13.02.2008
(51) Int. Cl.: H02G 15/105, H02G 15/188

(54) **Vorrichtung für eine Verbindungsstelle zwischen zwei elektrischen Hochspannungskabeln mit unterschiedlichen Durchmessern**
Device for a connection point between two electrical high voltage cables having different diameters
Dispositif pour relier entre eux deux câbles électriques de haute tension ayant des diamètres différents

(43) Veröffentlichungstag der Anmeldung: 19.08.2009
(73) Patentinhaber: Nexans, 75008 Paris (FR)
(72) Erfinder: Aue, Volker, 44137 Dortmund (DE); Baesch, Manfred, 46049 Oberhausen (DE); Cardinaels, Jozef, 9230 Wetteren (BE)
(74) Vertreter: Döring, Roger

(56) Entgegenhaltungen:
- EP-A- 1 158 638
- WO-A-92/08265
- GB-A- 1 280 041
- GB-A- 1 339 502

## Beschreibung

Die Erfindung bezieht sich auf eine Vorrichtung für eine Verbindungsstelle zwischen zwei elektrischen Hochspannungskabeln gemäß dem Oberbegriff des Patentanspruchs 1 (EP 1 158 638 B1).

Die GB-A-1 339 502 beschreibt eine Verbindungsvorrichtung für zwei geschirmte elektrische Hochspannungskabel. In derselben sind die Leiter der beiden Hochspannungskabel durch einen metallischen Klemmverbinder elektrisch leitend miteinander verbunden. Über den Schirmen derselben sind Schlauchabschnitte angebracht, die aus einem elektrisch leitenden und einem elektrisch nicht leitenden polymeren Werkstoff einteilig zusammengefügt sind. Die ganze Verbindungsstelle ist von einem aus zwei Teilen bestehenden Muffenkörper umgeben, von denen jeder über einem der beiden Hochspannungskabel liegt. Beide Teile des Muffenkörpers sind im mittleren Bereich der Verbindungsvorrichtung feuchtigkeitsdicht zusammengesteckt. Wenn die beiden Hochspannungskabel unterschiedliche Durchmesser haben, bleiben die Teile des Muffenkörpers unverändert. Eine Anpassung an den jeweiligen Durchmesser wird über die Schlauchabschnitte vorgenommen, die bei gleichbleibender äußerer Oberfläche unterschiedliche Innenabmessungen haben können.

Die bekannte Vorrichtung nach der eingangs erwähnten EP 1 158 638 B1 bezieht sich im wesentlichen auf die elektrisch leitende Verbindung der Leiter zweier Hochspannungskabel. Über den beiden abisolierten Enden der miteinander fluchtenden Leiter ist ein elektrisch gut leitendes, metallisches Rohr angeordnet und mechanisch fest mit beiden Leitern verbunden. Die Verbindungsstelle der beiden Leiter ist von einem Muffenkörper umgeben, der als vorgefertigtes, einteiliges Bauteil aus elastomerem Material ausgebildet ist, wie Silikon-Kautschuk, in das eine leitfähige Abschirmung für die Verbindungsstelle der Leiter der beiden Kabel eingebettet ist. Sie weist an zwei einander gegenüber liegenden Enden je ein mit einem Steuertrichter versehenes Durchgangsloch zum Durchführen der beiden Kabel auf. Vor dem Verbinden der Leiter wird der Muffenkörper mit aufgeweiteten Durchgangslöchern auf eines der Kabel aufgeschoben und dort "geparkt". Nach Fertigstellung der Verbindung wird sie in Montageposition gebracht, in welcher sie die Verbindungsstelle der beiden Leiter und die anschließenden Enden der mit der äußeren Leitschicht versehenen Isolierungen der beiden Leiter mit Preßsitz umschließt. Diese bekannte Vorrichtung wird für Kabel eingesetzt, deren Isolierungen gleiche Außendurchmesser haben, die nur im Rahmen von Fertigungstoleranzen schwanken. Sie ist zum Verbinden von Kabeln mit stark unterschiedlichen Außendurchmessern ihrer Isolierungen nicht einsetzbar. Solche Verbindungen werden beispielsweise zwischen sogenannten Rohrkabeln und erdverlegten Kabeln oder zwischen Unterwasserkabeln und Landkabeln benötigt. In bekannter Technik werden bei derartigen Kabeln an den Enden der beiden Kabel Endabschlüsse angebracht, die einander in einem metallischen Gehäuse gegenüber gestellt und elektrisch leitend miteinander verbunden sind. Zur elektrischen Isolierung ist das Gehäuse mit einem Isoliermittel gefüllt, beispielsweise mit SF6-Gas oder Isolieröl. Der Aufwand zum Verbinden solcher Kabel ist entsprechend hoch.

Der Erfindung liegt die Aufgabe zugrunde, die eingangs geschilderte Vorrichtung einfacher zu gestalten.

Diese Aufgabe wird gemäß dem kennzeichnenden Merkmal des Patentanspruchs 1 gelöst.

Bei Einsatz dieses Muffenkörpers kann die einfache und vorteilhafte Verbindungstechnik, wie sie beispielsweise in der eingangs erwähnten EP 1 158 638 B1 beschrieben ist, auch für zwei Hochspannungskabel mit erheblichen Durchmesserunterschieden ihrer Isolierungen verwendet werden. Die Innendurchmesser der beiden an den Enden des Muffenkörpers vorhandenen Öffnungen des Durchgangslochs sind so bemessen, daß derselbe einerseits ohne Gefahr einer Überdehnung vor dem Durchverbinden der beiden Leiter auf eines der Kabel aufgeschoben werden kann. Andererseits wird der Muffenkörper an beiden Enden mit den dort befindlichen Steuertrichtern, trotz der stark unterschiedlichen Außendurchmesser der Isolierungen der beiden Kabel, mit definierter Kraft gegen die äußeren Leitschichten gepreßt, und zwar bei beiden Kabeln mit zumindest annähernd der gleichen Kraft. Das ist für die Funktionsfähigkeit des Muffenkörpers von wesentlicher Bedeutung, weil derselbe durch die definierte Bemessung der Enden des Durchgangslochs insbesondere Temperaturschwankungen unbeschadet folgen kann, wie sie im Betrieb einer Kabelstrecke auftreten.

Die Unterschiede der Innendurchmesser der beiden Enden des Durchgangslochs entsprechen mit Vorteil den Unterschieden der Außendurchmesser der Isolierung beider Kabel.

Ein Ausführungsbeispiel des Erfindungsgegenstandes ist in den Zeichnungen dargestellt.

Es zeigen:
Fig. 1 schematisch den grundsätzlichen Aufbau einer Verbindungsstelle zwischen zwei Hochspannungskabeln im Schnitt.
Fig. 2 einen Schnitt durch eine Vorrichtung nach der Erfindung.

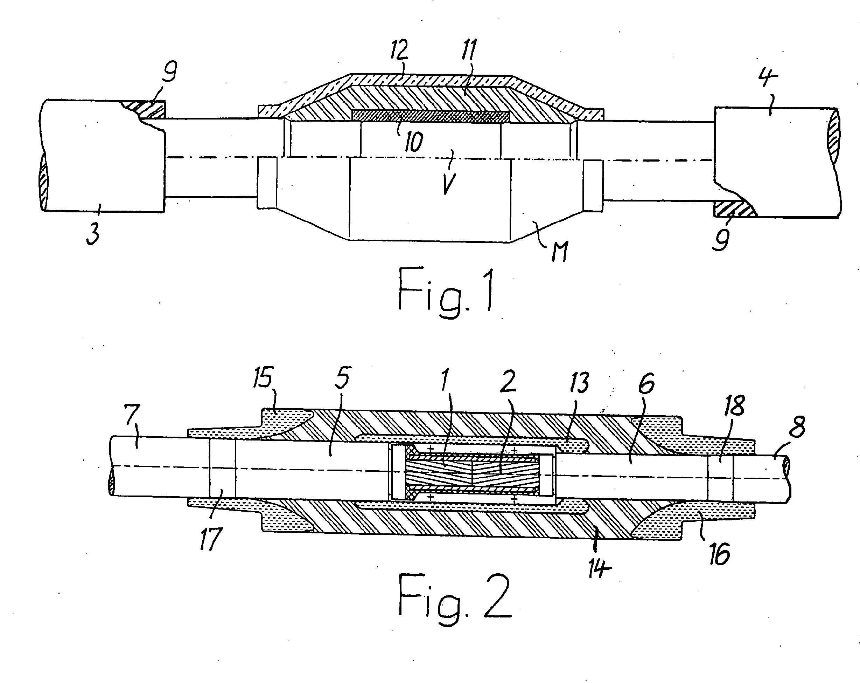

Die aus Fig. 2 ersichtlichen Leiter 1 und 2 von zwei Hochspannungskabeln 3 und 4 - im folgenden "Kabel 3 und 4" genannt - sind in einer Verbindungsstelle V elektrisch leitend miteinander verbunden. Die Leiter 1 und 2 können mehrdrähtig oder massiv sein. Sie können rund oder segmentförmig ausgeführt sein. Sie können aus Kupfer oder Aluminium bestehen. Die Leiter 1 und 2 sind jeweils von einer auch als Leiterglättung bezeichneten inneren Leitschicht umgeben ist. Diese beispielsweise Rußpartikel enthaltende Leitschicht ist in der Zeichnung nicht mit dargestellt.

Über der inneren Leitschicht ist jeweils eine extrudierte Isolierung 5 bzw. 6 angebracht, die von einer äußeren Leitschicht 7 bzw. 8 umgeben ist. Die äußeren Leitschichten 7 und 8 können genauso aufgebaut sein, wie die inneren Leitschichten. Über der äußeren Leitschicht 7 bzw. 8 können jeweils weitere Schichten der Kabel 3 und 4 angeordnet sein, die von einem äußeren Mantel 9 aus Isoliermaterial umgeben sind.

Über der Verbindungsstelle V ist eine Muffe M angebracht, die als vorgefertigtes Bauteil aus einer leitfähigen Abschirmung 10 und einem Formkörper 11 aus elastischem Isoliermaterial besteht, auf dem eine leitfähige äußere Beschichtung 12 angebracht ist. Die Beschichtung 12 hat elektrisch leitenden Kontakt mit den äußeren Leitschichten 7 und 8 der beiden Kabel 3 und 4, welche deren Isolierungen 5 und 6 umgeben. Als Material für die Isolierungen 5 und 6 wird vorzugsweise vernetztes Polyethylen verwendet. Die Muffe M sitzt mit Preßsitz auf den von ihm umschlossenen Teilen.

Die Vorrichtung nach der Erfindung ist als Ausführungsbeispiel in Fig. 2 dargestellt. Sie verbindet zwei Kabel 3 und 4, deren Isolierungen 5 und 6 stark unterschiedliche Außendurchmesser haben. So soll der Außendurchmesser der Isolierung 6 um mindestens 10 mm kleiner als der Außendurchmesser der Isolierung 5 sein. Die Leiter 1 und 2 der beiden Kabel 3 und 4 haben im dargestellten Ausführungsbeispiel gleiche Abmessungen und sie sind gleichartig aufgebaut. Sie können aber auch unterschiedliche Abmessungen haben mit entsprechend veränderter bzw. angepaßter Dicke der Isolierungen 5 und 6. Um die Verbindungsstelle zwischen den beiden Leitern 1 und 2 herum ist eine Abschirmelektrode 13 angeordnet. Sie ist an ihren Enden so gestaltet, daß sie an beiden Isolierungen 5 und 6 anliegt.

Die ganze Verbindungsstelle ist von einem Muffenkörper 14 aus dauerelastischem Isoliermaterial umgeben, an dessen beiden Enden je ein Steuerrichter 15 bzw. 16 angebracht ist. Der Muffenkörper 14 besteht mit Vorteil aus einem Ethylen-Propylen-Terpolymer (EPDM) oder aus Silikongummi. Die Steuertrichter 15 und 16 sind in den Muffenkörper 14 integriert. Sie bestehen mit Vorteil aus dem gleichen Material wie der Muffenkörper 14 und sind elektrisch leitfähig gemacht. Die Steuertrichter 15 und 16 liegen mit definiertem Preßsitz an der jeweiligen äußeren Leitschicht 7 bzw. 8 der beiden Kabel 3 und 4 an.

Der Muffenkörper 14 ist mit seinem "Innenleben" an die unterschiedlichen Außendurchmesser der Isolierungen 5 und 6 und die Abschirmelektrode 13 angepaßt. Er hat ein Durchgangsloch, das in seinem Verlauf abgestuft ist und an seinen beiden axialen Enden Innendurchmesser aufweist, die ebenso stark unterschiedlich sind, wie die Außendurchmesser der Isolierungen 5 und 6 der beiden Kabel 3 und 4. Der Unterschied der Innendurchmesser an den Enden des Durchgangslochs beträgt mit Vorteil - in Anpassung an die Isolierungen 5 und 6 - ebenfalls mindestens 10 mm. Die Innendurchmesser der Öffnungen an den Enden des Durchgangslochs des Muffenkörpers 14 sind definiert so bemessen, daß der Muffenkörper 14 bzw. seine Steuertrichter 15 und 16 mit vorgegebenem Preßsitz an den äußeren Leitschichten 7 und 8 der beiden Kabel 3 und 4 anliegen. Sie haben im Ruhezustand des Muffenkörpers 14 gegenüber den Außendurchmessern der Isolierungen 5 und 6 mit Vorteil ein solches Untermaß, daß sie um mindestens 8 % aufgeweitet werden müssen, um in Montageposition ausreichend fest an den Leitschichten 7 und 8 anzuliegen. Eine Obergrenze für die erforderliche Aufweitung des Durchgangslochs an den Enden des Muffenkörpers 14 liegt bei 33 %.

Bei der Montage der Vorrichtung nach der Erfindung wird beispielsweise wie folgt vorgegangen:

An den Enden der beiden Kabel 3 und 4 werden die Mäntel 9 auf vorgegebener Länge entfernt. Die dadurch freigelegten äußeren Leitschichten 7 und 8 werden danach ebenfalls entfernt, und zwar auf einer der Länge des Muffenkörpers 14 entsprechenden Länge. Die Enden der äußeren Leitschichten 7 und 8 gehen dabei mit konischem Übergang an den Stellen 17 und 18 auf die jeweilige Isolierung 5 bzw. 6 über, so wie es aus Fig. 2 hervorgeht. Danach werden die beiden Leiter 1 und 2 an ihren Enden von ihren Isolierungen 5 und 6 und den inneren Leitschichten befreit.

Der Muffenkörper 14 kann dann mit entsprechender Aufweitung seines Durchgangslochs auf eines der Kabelenden aufgeschoben werden. Das kann allerdings auch schon vor der geschilderten Behandlung der Kabelenden oder jederzeit nach Beendigung eines der angegebenen Arbeitsgänge erfolgen. Die Abschirmelektrode 13 wird danach auf eine der Isolierungen 5 oder 6 aufgeschoben.

Anschließend werden die beiden Leiter 1 und 2 der Kabel 3 und 4 in bekannter Technik elektrisch leitend miteinander verbunden. Über die Verbindungsstelle der beiden Leiter 1 und 2 wird dann die Abschirmelektrode 13 geschoben, bis sie die aus Fig. 2 ersichtliche Position erreicht hat, in welcher sie einerseits an der Isolierung 5 und andererseits an der Isolierung 6 anliegt. Abschließend wird der Muffenkörper 14 in seine Endposition verschoben, in der seine Steuertrichter 15 und 16 mit Preßsitz an den äußeren Leitschichten 7 und 8 der beiden Kabel 3 bzw. 4 anliegen.

Nach abgeschlossener Montage des Muffenkörpers 14 wird über demselben beispielsweise eine äußere Umhüllung angebracht, die mit Vorteil ebenso wie die Umhüllung der Kabel 3 und 4 einschließlich deren äußerem Mantel 9 aufgebaut sein kann. Im Aufbau der Kabel 3 und 4 vorhandene elektrische Schirme werden in einer solchen Umhüllung durchverbunden. Statt der Umhüllung kann um den Muffenkörper 14 auch ein Metallgehäuse mit Isoliermantel herum angebracht werden.

## Patentansprüche

1. Vorrichtung für eine Verbindungsstelle zwischen zwei elektrischen Hochspannungskabeln (3,4), die jedes einen elektrischen Leiter (1,2), eine an demselben anliegende innere Leitschicht, eine die Leitschicht umgebende Isolierung (5,6) und eine an der Isolierung anliegende äußere Leitschicht (7,8) sowie einen über der äußeren Leitschicht angebrachten Mantel (9) aufweisen, bei welcher die von den umgebenden Schichten befreiten Leiter elektrisch leitend miteinander verbunden sind und bei welcher die Verbindungsstelle der beiden Leiter von elektrischen Schirmelementen und einem einteiligen, aus elastischem Isoliermaterial bestehenden, langgestreckten Muffenkörper (14) mit einem Durchgangsloch umgeben ist, der an seinen beiden zum Durchführen der Kabel bestimmten axialen Enden mit elektrischen Steuertrichtern (15,16) ausgerüstet ist, die in Montageposition an den von den Mänteln befreiten äußeren Leitschichten (7,8) der beiden Kabel (3,4) anliegen, **dadurch gekennzeichnet, daß** die Innendurchmesser des Durchgangslochs des Muffenkörpers (14) an seinen beiden mit den Steuertrichtern (15,16) ausgerüsteten axialen Enden zu seiner Verwendung in einer Verbindungsstelle von zwei Kabeln (3,4), bei denen die Außendurchmesser ihrer Isolierungen (5,6) um mindestens 10 mm unterschiedlich sind, angepaßt an diese unterschiedlichen Außendurchmesser definiert unterschiedlich bemessen sind.

2. Vorrichtung nach Anspruch 1, **dadurch gekennzeichnet, daß** der Unterschied zwischen den Innendurchmessern des Durchgangslochs an den beiden axialen Enden des Muffenkörpers (14) gleich dem Unterschied zwischen den Außendurchmessern der Isolierungen (5,6) der beiden Kabel (3,4) ist.

3. Vorrichtung nach Anspruch 1 oder 2, **dadurch gekennzeichnet, daß** das Durchgangsloch des Muffenkörpers (14) an seinen Enden Innendurchmesser mit einem Untermaß gegenüber den Isolierungen (5,6) der beiden Kabel (3,4) aufweist, das eine Aufweitung des Durchgangslochs zum Erreichen der Montageposition um mindestens 8 % erfordert.

4. Vorrichtung nach einem der Ansprüche 1 bis 3, **dadurch gekennzeichnet, daß** der Muffenkörper aus einem Ethylen-Propylen-Terpolymer oder aus Silikongummi besteht.

5. Vorrichtung nach einem der Ansprüche 1 bis 4, **dadurch gekennzeichnet, daß** die axialen Enden des Muffenkörpers (14) zur Bildung der Steuertrichter (15,16) aus elektrisch leitfähig gemachtem Ethylen-Propylen-Terpolymer bzw. Silikongummi bestehen.

## Claims

1. A device for a junction point between two electrical high-voltage cables (3,4) which each has an electrical conductor (1,2), an inner conductive layer surrounding the same, an insulation (5,6) which surrounds the conductive layer and an outer conductive layer (7,8) which surrounds the insulation, as well as a sheath (9) which is arranged over the outer conductive layer, in which the conductors, from which the surrounding layers have been removed, are electrically conductively connected to one another and in which the junction point of the two conductors is surrounded by electrical screening elements and by a one piece elongated sleeve body (14), which consists of elastic insulating material and has a through-hole, which sleeve body (14) is equipped at its two axial ends, which are intended for the cable to pass through, with electrical control funnels (15,16) which, in the mounting position, abut to the outer conductive layers (7,8) of the two cables (3,4) from which the sheaths have been removed, **characterized in that** the internal diameters of the through-hole of the sleeve body (14) at its two axial ends, which are equipped with the control funnels (15,16), is adapted for its use in a junction point of two cables (3,4) with outer diameters of their insulations (5,6) which differ by at least 10 mm, to these different external diameters in a defined manner.

2. Apparatus according to claim 1, **characterized in that** the difference between the internal diameters of the through-hole at the two axial ends of the sleeve body (14) is equal to the difference between the external diameters of the insulation (5, 6) of the two cables (3, 4).

3. Apparatus according to claim 1 or 2, **characterized in that** the through-hole in the sleeve body (14) has, at its ends, an internal diameter which is smaller in size than the insulation (5, 6) of the two cables (3, 4), requiring that the through-hole be widened by at least 8% in order to achieve the fitted position.

4. Apparatus according to one of the claims 1 to 3, **characterized in that** the sleeve body is composed of an ethylene-propylene-terpolymer or of silicone rubber.

5. Apparatus according to one of the claims 1 to 4, **characterized in that**, in order to form the control funnels (15, 16), the axial ends of the sleeve body (14) are composed of ethylene-propylene-terpolymer or silicone rubber that has been made electrically conductive.

## Revendications

1. Dispositif pour un point de liaison entre deux câbles électriques à haute tension (3, 4) qui présentent chacun un conducteur électrique (1, 2), une couche conductrice intérieure reposant sur celui-ci, un isolant (5, 6) qui entoure la couche conductrice et une couche conductrice extérieure (7, 8) reposant sur l'isolant ainsi qu'une enveloppe (9) appliquée au-dessus de la couche conductrice extérieure, avec lequel les conducteurs libérés des couches qui les entourent sont reliés de manière électriquement conductrice entre eux et avec lequel le point de liaison des deux conducteurs est entouré par des éléments de blindage électriques et un corps de manchonnage (14) monobloc allongé, constitué de matériau isolant souple et muni d'un trou de passage, lequel est équipé à ses deux extrémités axiales destinées au passage du câble de cônes de contrôle électriques (15, 16) qui, en position de montage, reposent sur les couches conductrices extérieures (7, 8) des deux câbles (3, 4) libérées des enveloppes, **caractérisé en ce que** les diamètres intérieurs du trou de passage du corps de manchonnage (14) à ses deux extrémités axiales équipées des cônes de contrôle (15, 16) présentent des dimensions différentes en vue de son utilisation dans un point de liaison de deux câbles (3, 4) dont les diamètres extérieurs de leurs isolants (5, 6) sont différents d'au moins 10 mm, définies de manière adaptée à ces diamètres extérieurs différents.

2. Dispositif selon la revendication 1, **caractérisé en ce que** la différence entre les diamètres intérieurs du trou de passage aux deux extrémités axiales du corps de manchonnage (14) est égale à la différence entre les diamètres extérieurs des isolants (5, 6) des deux câbles (3, 4).

3. Dispositif selon la revendication 1 ou 2, **caractérisé en ce que** le trou de passage du corps de manchonnage (14) présente à ses extrémités un diamètre intérieur ayant une cote réduite par rapport aux isolants (5, 6) des deux câbles (3, 4), laquelle exige un élargissement du trou de passage d'au moins 8 % pour pouvoir atteindre la position de montage.

4. Dispositif selon l'une des revendications 1 à 3, **caractérisé en ce que** le corps de manchonnage se compose d'un éthylène-propylène-diène monomère ou de caoutchouc au silicone.

5. Dispositif selon l'une des revendications 1 à 4, **caractérisé en ce que** les extrémités axiales du corps de manchonnage (14), pour former les cônes de contrôle (15, 16), se composent d'un éthylène-propylène-diène monomère ou de caoutchouc au silicone rendu électriquement conducteur.
